# EUROPEAN PATENT APPLICATION

(11) **EP 2 846 476 A1**
(43) Date of publication of application: **11.03.2015**
(21) Application number: 13768386.8
(22) Date of filing: 18.03.2013
(51) Int. Cl.: H04B 7/155, H04B 7/06, H04B 7/185

(54) **HELICOPTER SATELLITE COMMUNICATION SYSTEM, COMMUNICATION APPARATUS, COMMUNICATION METHOD, AND COMMUNICATION PROGRAM**

(30) Priority: 29.03.2012 JP 2012077557
(71) Applicant: Mitsubishi Electric Corporation, Tokyo 100-8310 (JP)
(72) Inventor: YAMAMOTO, Kazushi, Tokyo 100-8310 (JP); OZAKI, Yutaka, Tokyo 100-8310 (JP); OKUDA, Hayato, Tokyo 141-0032 (JP)
(74) Representative: Sajda, Wolf E.
(86) International application number: PCT/JP2013/057666
(87) International publication number: WO 2013/146422

(57) **Abstract**

A helicopter satellite communication system in which a terrestrial station communication apparatus communicates with a helicopter-mounted communication apparatus via a communication satellite (300). The terrestrial station communication apparatus includes: an encoder (122b) that performs error-correcting encoding of target transmission information; a packet interleaver (122d) that divides the encoded information into a plurality of packets and rearranges the packets; and a transmitter (123) that transmits the rearranged packets to the helicopter-mounted communication apparatus. The helicopter-mounted communication apparatus includes: a receiver (224) that receives the packets that are transmitted from the terrestrial station communication apparatus: a packet de-interleaver (222g) that rearranges the received packets in the original order; and a decoder (222h) that, by decoding the rearranged packets, restores the information that is lost due to the rotor blades of the helicopter.

## Description

### Technical Field

The present disclosure relates to a helicopter satellite communication system, communication apparatus, communication method, and communication program.

### Background Art

In the case of a helicopter satellite communication system in which communication with a helicopter is performed by using a communication satellite, the rotor blades of the helicopter intermittently block the communication path between the helicopter and the communication satellite. Patent Literature 1 discloses a helicopter satellite communication method that makes it possible to transmit data efficiently even in conditions where the communication path is blocked by the rotor blades.

### Citation List

### Patent Literature

- Patent Literature 1:: Unexamined Japanese Patent Application Kokai Publication JP-A-2009-212 665

### Summary of the Invention

### Technical Problem

Generally, in a helicopter satellite communication system, a communication method called time diversity is employed. Here, time diversity is a communication method in which data loss due to the effects of the rotor blades and/or the like is reduced by transmitting the same data multiple times at staggered intervals.

Normally, in order to achieve real-time communication (for example, video broadcast or voice communication) it is sufficient to maintain a communication path capacity (hereafter, referred to as "bandwidth") that is approximately 20 % to 30 % larger than the amount of information per unit time of the video, audio and the like.

However, in a conventional helicopter satellite communication system that employs time diversity, the same data is transmitted multiple times, so that it is necessary to maintain a bandwidth that is several times wider than the amount of information per unit time of the video and the like (for example, in the case of a helicopter satellite communication system that transmits the same data four times, in order to perform real-time transmission of video having a bit rate of 1 Mbps, it is necessary to maintain a communication path capacity of at least 4 Mbps).

In other words, in a conventional helicopter satellite communication system, there is a problem of not being able to efficiently utilize the information-transmitting capability of bandwidth.

The present disclosure has been made in order to solve the above-explained technical issue, and it is an objective of the present disclosure is to provide a helicopter satellite communication system, communication apparatus, communication method and communication program capable of a highly efficient use of bandwidth.

### Solution to the Problem

The helicopter satellite communication system of the present disclosure is a helicopter satellite communication system comprising: a first communication apparatus to be mounted in a helicopter; and a second communication apparatus that is adapted to communicate with the first communication apparatus via a satellite; wherein one communication apparatus among the first communication apparatus and second communication apparatus includes:
an encoder that is adapted to encode target transmission information using a predetermined error-correcting encoding method;
a packet interleaver that is adapted to divide the encoded target transmission information into a plurality of packets, and to rearrange the order of packets so that the packets that are consecutive in the packet order immediately after the division are not placed consecutively; and
a transmitter that is adapted to transmit the packets that are rearranged by the packet interleaver to the other communication apparatus via the satellite; and the other communication apparatus includes:
   a receiver that is adapted to receive the packets that are transmitted from the one communication apparatus via the satellite;
   a packet de-interleaver that is adapted to rearrange the received packets into the original order; and
   a decoder that, by decoding the target transmission information that is acquired from the packets that are rearranged by the packet de-interleaver, is adapted to restore the information that is lost due to rotor blades of the helicopter.

### Advantageous Effects of the Invention

According to the present disclosure, it is possible to provide a helicopter satellite communication system, communication apparatus, communication method and communication program capable of highly efficient use of bandwidth.

### Brief Description of the Drawings

- FIG. 1: is a drawing for explaining an overview of a helicopter satellite communication system of an embodiment of the present disclosure;
- FIG. 2: is a block diagram of a helicopter satellite communication system of an embodiment of the present disclosure;
- FIG. 3: is a function block diagram for explaining the functions of a controller included in a terrestrial station communication apparatus and a controller included in a helicopter-mounted communication apparatus;
- FIG. 4: is a function block diagram for explaining the functions of a controller included in a terrestrial station communication apparatus and a controller included in a helicopter-mounted communication apparatus;
- FIG. 5: is a drawing for explaining helicopter information that is stored in storage included in a terrestrial station communication apparatus;
- FIG. 6: is a drawing for explaining blocked periods during which the rotor blades of a helicopter block communication;
- FIG. 7: is a drawing for explaining blocked-period information that is stored in storage included in a helicopter-mounted communication apparatus;
- FIG. 8: is a flowchart for explaining the information transmitting process (terrestrial station side) and information receiving process (helicopter side) of an embodiment of the present disclosure;
- FIG. 9: is a drawing for explaining a multiplexing process that is executed by a multiplexer;
- FIG. 10A: is a drawing illustrating a state in which target transmission information is divided into blocks having a predetermined length;
- FIG. 10B: is a drawing illustrating a state in which error-correcting code is added to divided blocks;
- FIG. 11A: is a drawing illustrating a state in which error-correcting blocks are divided into a plurality of packets;
- FIG. 11B: is a drawing illustrating a state in which packets are rearranged;
- FIG. 11C: is a drawing illustrating a state in which a packet belonging to an error-correcting block is inserted between packets that belong to the same error-correcting block, which is different from the error-correcting block to which the inserted packet belongs;
- FIG. 12A: is a drawing illustrating a state in which packets are stored in a buffer;
- FIG. 12B: is a drawing illustrating a state in which packets are output from a buffer;
- FIG. 12C: is a drawing illustrating packets that have been rearranged;
- FIG. 13A: is a drawing illustrating a state in which received packets are written in a buffer;
- FIG. 13B: is a drawing illustrating a state in which packets are read from a buffer;
- FIG. 14A: is a drawing illustrating a state in which received packets are rearranged in the original order;
- FIG. 14B: is a drawing illustrating a state in which error-correcting blocks are acquired from the packets that are rearranged in the original order;
- FIG. 15A: is a drawing illustrating a state in which the error-correcting blocks are decoded;
- FIG. 15B: is a drawing illustrating a state in which the decoded blocks are combined;
- FIG. 16: is a drawing for explaining a data division process that is executed by a data divider;
- FIG. 17: is a flowchart for explaining an information receiving process (terrestrial station side) and an information transmitting process (helicopter side) of an embodiment of the present disclosure;
- FIG. 18A: is a drawing illustrating a state in which the positions of lost packets are dispersed when a packet interleaving is executed;
- FIG. 18B: is a drawing illustrating a state in which the positions of lost packets are concentrated in specific error-correcting blocks when a packet interleaving is not executed;
- FIG. 19A: is a drawing illustrating a state in which a delay in the output of information is caused by error correction;
- FIG. 19B: is a drawing illustrating a state in which the delay in the output of information is increased by packet interleaving; and
- FIG. 19C: is a drawing illustrating a state in which a delay in output is suppressed by rearranging packets every minimum number of packets.

### Description of Embodiments

An embodiment for carrying out the present disclosure is explained hereafter with reference to the drawings.

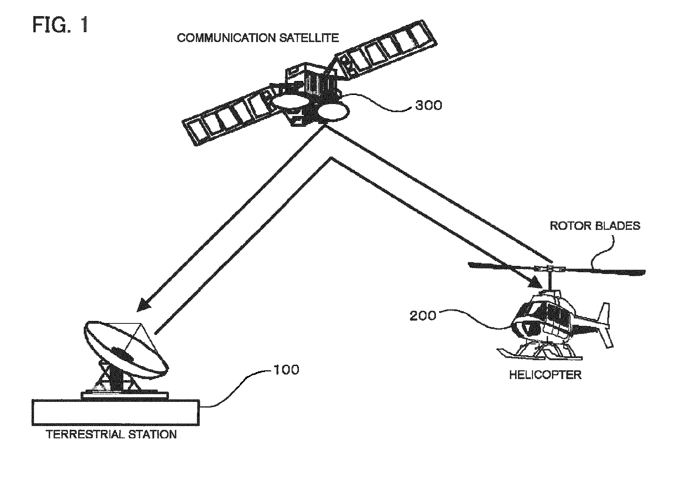

As illustrated in FIG. 1, for example, the helicopter satellite communication system 1 of an embodiment of the present disclosure is a system for performing communication between a terrestrial station 100 and a helicopter 200 via a communication satellite 300.

Rotor blades for giving lift and a propulsive force to the helicopter 200 are located on the top section of the helicopter 200. As the rotor blades rotate, communication between the helicopter 200 and the communication satellite 300 is blocked intermittently. In the following, the structure of the helicopter satellite communication system 1 is explained.

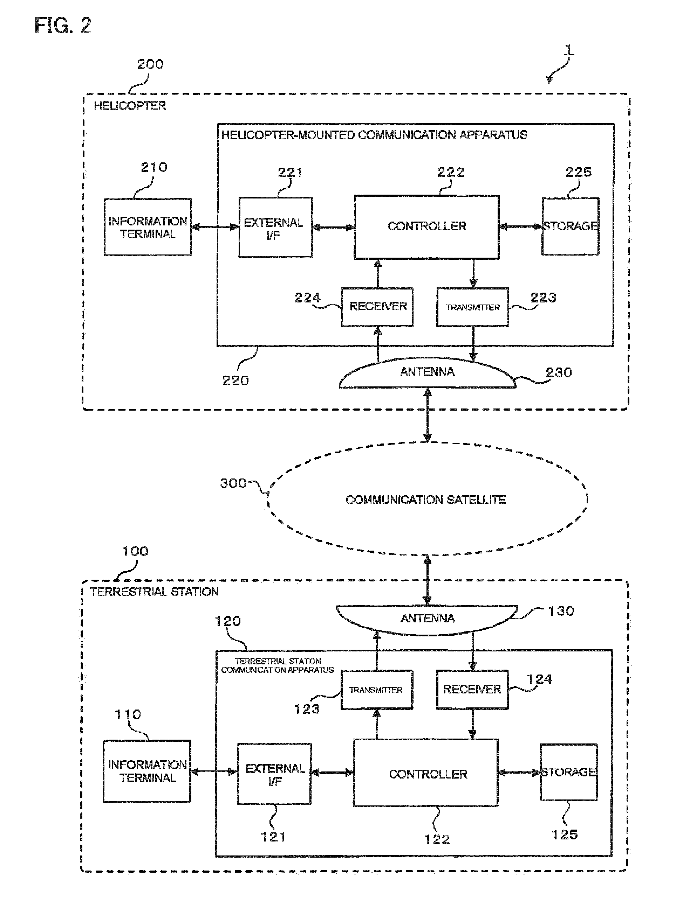

As illustrated in FIG. 2, the helicopter satellite communication system 1 includes an information terminal 110, a terrestrial station communication apparatus 120, an antenna 130, an information terminal 210, a helicopter-mounted communication apparatus 220 and an antenna 230.

The information terminal 110, the terrestrial station communication apparatus 120, and the antenna 130 are located in the terrestrial station 100, and the information terminal 210, the helicopter-mounted communication apparatus 220 and the antenna 230 are mounted in the helicopter 200.

Here, the "terrestrial station" is a wireless station such as a fixed station or mobile station on land or sea, that is, equipment on land or sea that performs communication with equipment that orbits around the earth such as a communication satellite, a broadcasting satellite, a space station or the like (hereafter, simply referred to as a "satellite").

A terrestrial station includes not only terrestrial equipment that is designed for performing communication with a satellite, but also other equipment such as a relay station, base station, as well as a building, moving body (train, automobile, ship and the like) that is connected to that terrestrial equipment by a wired or wireless connection.

First, the structure of the information terminal 110, terrestrial station communication apparatus 120 and antenna 130 that are located at the terrestrial station 100 is explained.

The information terminal 110, for example, is an apparatus for performing communication between an operator or the like at the terrestrial station and a pilot that operates the helicopter. The information terminal 110 includes an information device such as a control panel, a camera, a microphone, a monitor, headphones and the like.

The information terminal 110 transmits information such as "video" that is taken by the camera, "audio" that is obtained from the microphone, or information such as "control or monitoring information" (for example, photographing instruction information, or camera remote control information) that is output from the control panel to the terrestrial station communication apparatus 120.

The terrestrial station communication apparatus 120 is an apparatus for performing communication with the helicopter-mounted communication apparatus 220 via the communication satellite 300. The terrestrial station communication apparatus 120 includes an external interface 121, a controller 122, a transmitter 123, a receiver 124 and storage 125.

The external interface 121 includes an external-device connecting interface such as a LAN (Local Area Network) apparatus or USB (Universal Serial Bus) apparatus. The external interface 121 communicates with the information terminal 110 via a communication cable or wireless communication.

The controller 122 includes a processing apparatus such as a processor. The controller 122 operates according to a program that is stored in ROM (Read Only Memory) or RAM (Random Access Memory) which are not illustrated in the figure, and executes various operations such as an "information transmitting process" or an "information receiving process" which are described later.

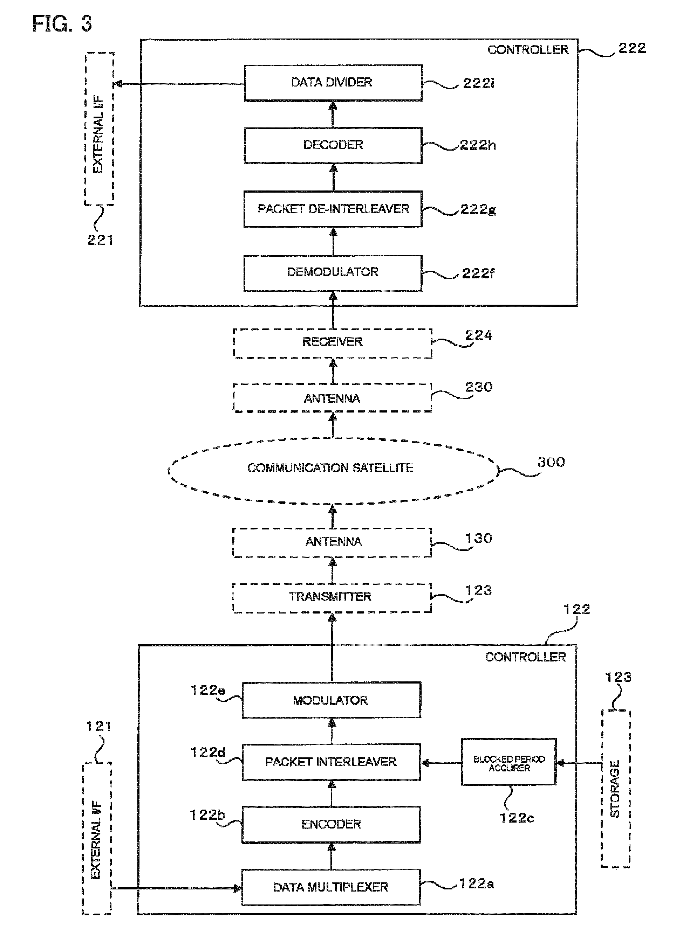

As illustrated in FIG. 3, by operating according to the "information transmitting process", the controller 122 functions as a data multiplexer 122a, encoder 122b, blocked period acquirer 122c, packet interleaver 122d, and modulator 122e.

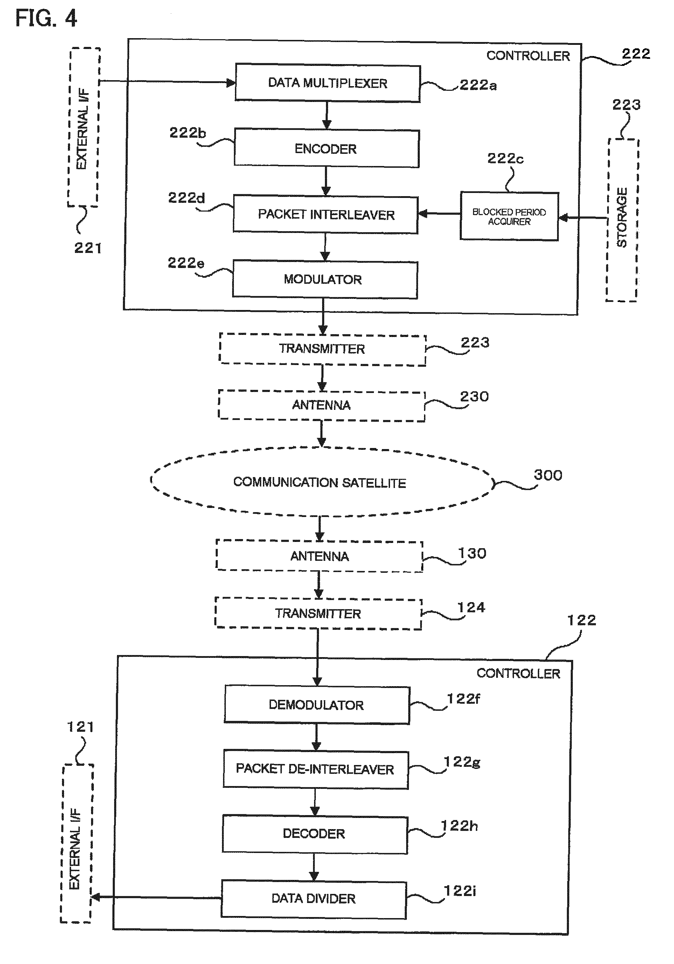

As illustrated in FIG. 4, by operating according to the "information receiving process", the controller 122 functions as a demodulator 122f, a packet de-interleaver 122g, a decoder 122h and data divider 122i. These functions are described later in the explanation of the "information transmitting process" and "information receiving process".

Returning to FIG. 2, the transmitter 123 includes a frequency converter, an amplifier and the like. The transmitter 123 converts an electric signal that is output from the controller 122 into an electric signal in a frequency band that is used for satellite communication (for example, the microwave band of 3 GHz to 30 GHz or the milliwave band of 30 GHz to 300 GHz), and then amplifies the converted electric signal and outputs that signal to the antenna 130.

The receiver 124 includes an amplifier, a frequency converter and the like. The receiver 124 amplifies an electric signal that is output from the antenna 130, and then converts the amplified electric signal into an electric signal in the frequency band required by the controller 122 and outputs the converted signal to the controller 122.

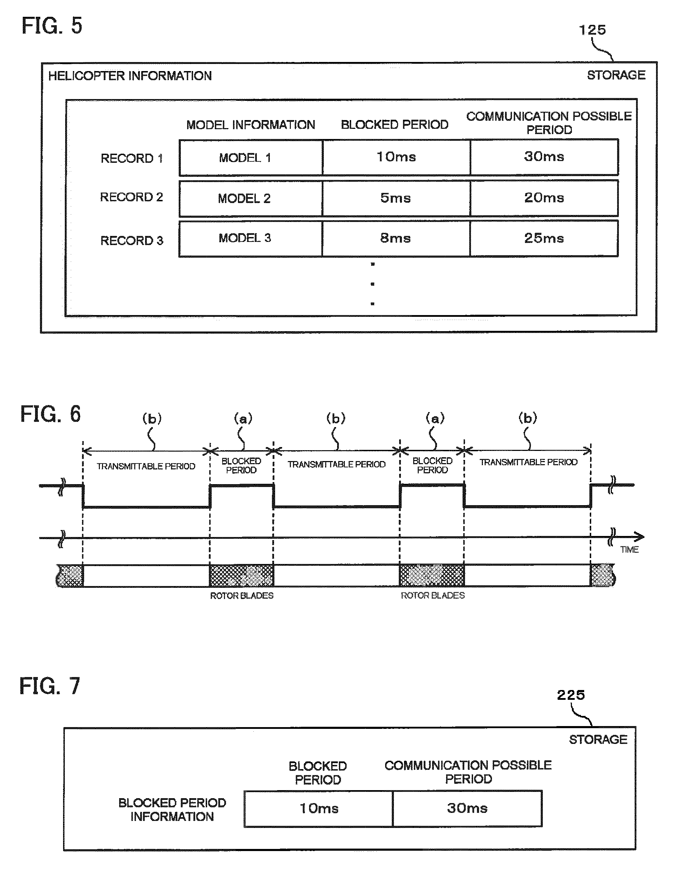

The storage 125 includes a memory apparatus such as a DRAM (Dynamic Random Access Memory), SRAM (Static Random Access Memory), flash memory, hard disc or the like for which reading and writing data is possible. As illustrated in FIG. 5, various data such as "helicopter information" is stored in the storage 125.

"Helicopter information" is information defined for each model of helicopter, and is information that stores the timing at which the communication path is blocked by the rotor blades of the helicopter. For example, information that is stored in helicopter information includes information that correlates "model information" that indicates the model of the helicopter, "blocked periods" during which communication is blocked by the rotor blades of the helicopter that is identified by that model information (for example, periods (a) illustrated in FIG. 6) and "communication-possible periods" during which communication is possible (for example, periods (b) illustrated in FIG. 6).

Returning to FIG. 2, the antenna 130 includes a satellite communication antenna (for example, a parabola antenna) that transmits radio waves to a satellite, and receives radio waves from the satellite. The antenna 130 converts electric signals that are supplied from the transmitter 123 into radio waves, and transmits the radio waves toward the communication satellite 300. The antenna 130 also converts radio waves that are received from the communication satellite 300 into an electric signal, and outputs that electric signal to the receiver 124.

Next, the information terminal 210, the helicopter-mounted communication apparatus 220, and the antenna 230 that are mounted on the helicopter 200 are explained.

The information terminal 210 is an apparatus for performing communication between the pilot or the like of the helicopter 200 and the operator or the like of the terrestrial station 100. The information terminal 210 includes information devices such as a control panel, a camera, a microphone, a monitor, headphones and the like. The information terminal 210 transmits information such as "video" that is taken by the camera, "audio" that is obtained from the microphone, and/or information such as "control or monitoring information" that is output from the control panel to the helicopter-mounted communication apparatus 220.

The helicopter-mounted communication apparatus 220 is an apparatus for performing communication with the terrestrial station communication apparatus 120 via the communication satellite 300. The helicopter-mounted communication apparatus 220 includes an external interface 221, a controller 222, a transmitter 223, a receiver 224 and storage 225.

The external interface 221 includes an external-device connecting interface such as a LAN (Local Area Network) apparatus or USB (Universal Serial Bus) apparatus. The external interface 221 communicates with the information terminal 210 via communication cable or wireless communication.

The controller 222 includes a processing apparatus such as a processor. The controller 222 operates according to a program that is stored in ROM (Read Only Memory) or RAM (Random Access Memory) which are not illustrated in the figure, and executes various operations such as an "information transmitting process" or an "information receiving process" which are described later.

As illustrated in FIG. 4, by operating according to the "information transmitting process", the controller 222 functions as a data multiplexer 222a, encoder 222b, blocked period acquirer 222c, packet interleaver 222d, and modulator 222e.

As illustrated in FIG. 3, by operating according to the "information receiving process", the controller 222 functions as a demodulator 222f, a packet de-interleaver 222g, a decoder 222h and a data divider 222i. These functions are described later in the explanation of the "information transmitting process" and "information receiving process".

Returning to FIG. 2, the transmitter 223 includes a frequency converter, an amplifier and the like. The transmitter 223 converts an electric signal that is output from the controller 222 into an electric signal of a frequency band that is used for satellite communication, and then amplifies the converted electric signal and outputs the amplified electric signal to the antenna 230.

The receiver 224 includes an amplifier, a frequency converter and the like. The receiver 224 amplifies an electric signal that is supplied from the antenna 230, and then converts the amplified electric signal into an electric signal of the frequency band required by the controller 222 and outputs the signal to the controller 222.

The storage 225 includes a memory apparatus such as a DRAM (Dynamic Random Access Memory), SRAM (Static Random Access Memory), flash memory, hard disc or the like for which reading and writing data is possible. As illustrated in FIG. 7, data such as "blocked period information" is stored in storage 225.

"Blocked period information" refers to stored information of the timing at which communication is blocked by the rotor blades of the helicopter 200. For example, information that is stored in the blocked period information includes information that correlates "blocked periods" during which communication is blocked by the rotor blades of the helicopter (for example, periods (a) illustrated in FIG. 6) and "communication-possible periods" during which communication is possible (for example, periods (b) illustrated in FIG. 6).

Returning to FIG. 2, the antenna 230 includes a satellite communication antenna for a moving body (for example, a parabolic antenna that includes a satellite tracking function) that transmits radio waves to a satellite, and receives radio waves from a satellite. The antenna 230 converts electric signals that are output from the transmitter 223 into radio waves, and transmits the radio waves toward the communication satellite 300. The antenna 230 also converts radio waves that are received from the communication satellite 300 into an electric signal, and outputs that electric signal to the receiver 224.

Next, the operation of a helicopter satellite communication system 1 having the foregoing structure is explained.

The operation of the helicopter satellite communication system 1 is divided into a process of transmitting information from the terrestrial station 100 to the helicopter 200 (hereafter, referred to as a "terrestrial station transmitting process"), and a process of transmitting information from the helicopter 200 to the terrestrial station 100 (hereafter, referred to as a "helicopter transmitting process"). First, the terrestrial station transmitting process is explained.

The controller 122 of the terrestrial station communication apparatus 120 receives information (hereafter, referred to as "target transmission information") from the information terminal 110 via the external interface 121, and then starts the "information transmitting process" for transmitting the received target transmission information to the helicopter 200. T

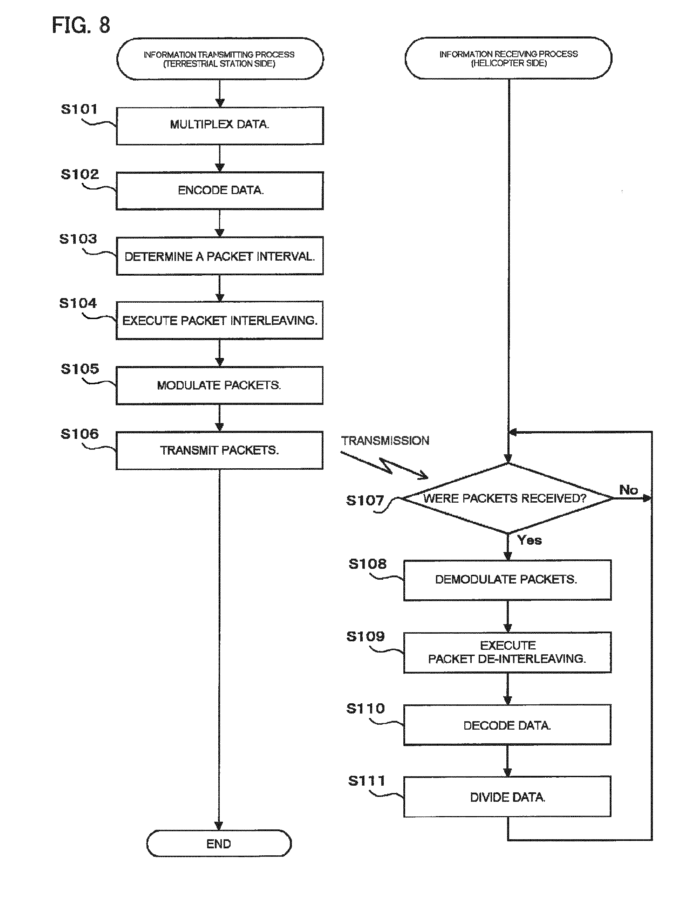

Then, after the power to the helicopter-mounted communication apparatus 220 has been turned ON, the controller 222 starts the "information receiving process" that receives the target transmission information from the terrestrial station 100 and outputs that information to the information terminal 210. In the following, the "information transmitting process" and "information receiving process" are explained with reference to the flowchart shown in FIG. 8.

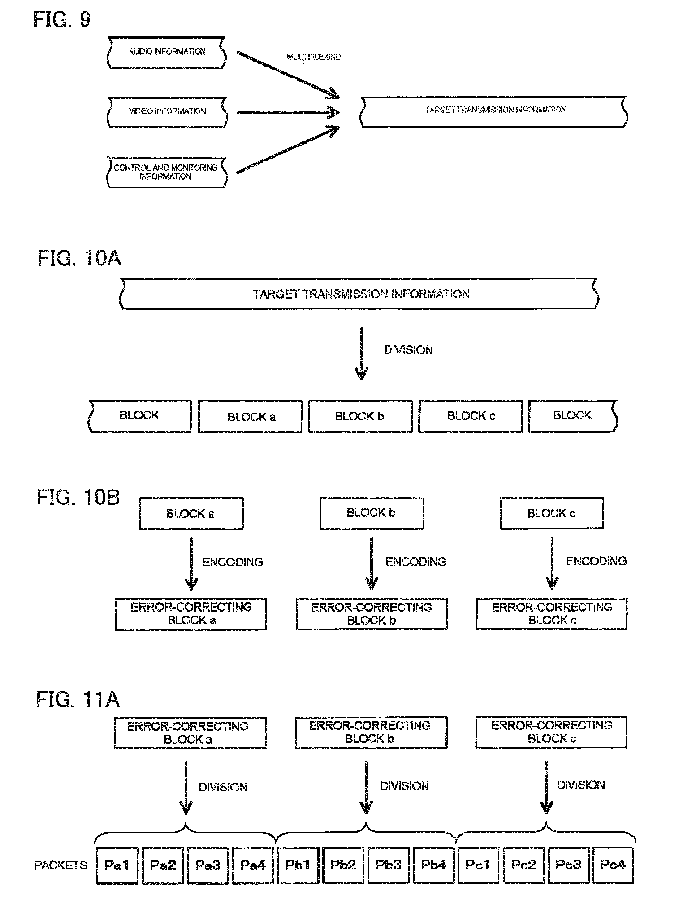

The data multiplexer 122a receives target transmission information such as video or audio from the information terminal 110 via the external interface 121, and then, as illustrated in FIG. 9, executes a multiplexing process that multiplexes the plural time series data into one time series data (step S101). The data multiplexer 122a can also reduce the amount of data by compressing the data before or after multiplexing the data.

Returning to FIG. 8, the encoder 122b, as illustrated in FIG. 10A, divides the multiplexed target transmission information into blocks having a predetermined length, and as illustrated in FIG. 10B, encodes the divided target transmission information in block units (step S102).

Here, "encoding" means the conversion of data to data of another format with a predetermined error-correcting encoding method, and for example, means attaching of error-correcting code to the data. The error-correcting encoding method is not limited to a specific method, and for example, it is possible to use block encoding such as LDPC (Low Density Parity Check) code, or Reed-Solomon code.

In order to suppress loss of data due to the rotor blades, it is preferable to use an encoding method such as product code or connected code having high burst error correction capability and/or high loss correction capability as the error-correcting encoding method.

Moreover, in order to suppress loss of data due to the rotor blades, it is preferable to attach a 150 % or greater redundancy bit to the multiplexed data by the encoder 122b. In the following explanation, in order to facilitate understanding, the encoded blocks are called "error-correcting blocks".

Returning to FIG. 8, the blocked period acquirer 122c determines, based on helicopter data that is stored in storage 125, the length of a blocked period during which information is blocked by the rotor blades of the helicopter 200 to which information is transmitted (hereafter, this will simply be referred to as the "blocked period") (step S103).

For example, it is presumed that helicopter information such as that illustrated in FIG. 5 is stored in storage 125, and that the model information of the helicopter 200 to which information is transmitted is "model 1". In this case, the blocked period acquirer 122c obtains record 1, in which the model information is "model 1", from the helicopter information, and determines that the blocked period is 10 ms that is stored in that record 1.

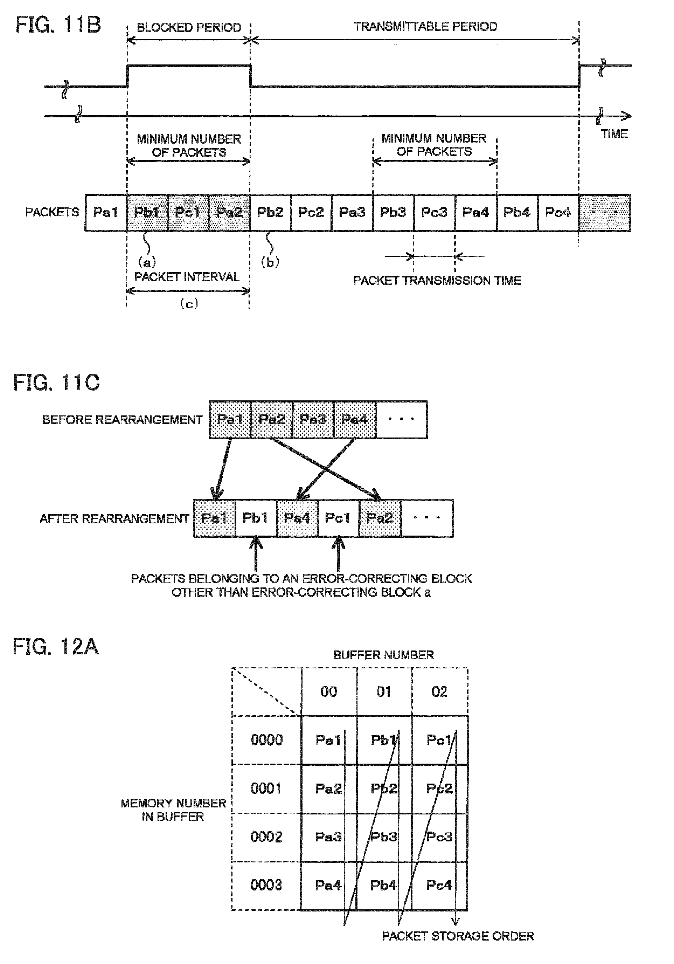

Returning to FIG. 8, the packet interleaver 122d, as illustrated in FIG. 11A, divides the error-correcting blocks that are encoded by the encoder 122b into a plurality of packets. The packet interleaver 122d, as illustrated in FIG. 11B, also rearranges the order of the packets so that packets that are consecutive at a timing immediately after the division (for example packets (a) and (b) illustrated in FIG. 11B; hereafter, these are called "consecutive packets") are arranged to have a packet interval that is equal to or greater than the blocked period determined by the blocked period acquirer 122c (step S104).

For example, the packet interleaver 122d stores in advance the packet transmission time that is required to transmit one packet, then based on the stored packet transmission time and the blocked period that is determined by the blocked period acquirer 122c, the packet interleaver 122d, as illustrated in FIG. 11B, determines the minimum number of packets that is equal to or greater than the blocked period when packets are continuously transmitted (for example, 3 packets; hereafter, this is called the "minimum number of packets"). The packet interleaver 122d then arranges the packets so that there are consecutive packets at every determined minimum number of packets.

Here, the "packet interval" is a transmission interval of two packets that are transmitted on the same communication path, and is an interval between the transmission beginning of first packet and the transmission beginning of next packet after the first packet. For example, when the two packets are packets (a) and (b) illustrated in FIG. 11B, the packet interval is the interval (c) illustrated in FIG. 11B.

The packet interleaver 122d can also rearrange the packets weaving together the packets of other error-correcting blocks so that packets of the same error-correcting block are not consecutive. For example, the packet interleaver 122d inserts packets belonging to error-correcting block b and error-correcting block c between packets belonging to error-correcting block a, and rearranges packets as illustrated in FIG. 11C, for example.

The packet interleaver 122d can also rearrange packets so that packets within the same error-correcting block are arranged having packet intervals that are equal to or greater than the blocked period so that a plurality of packets belonging to the same error-correcting block are not lost at the same time by one blockage of the communication path.

When doing this, the packet interleaver 122d can also rearrange packets so that packets in the same error-correcting block are arranged per every minimum number of packets. For example, as illustrated in FIG. 11B, the packet interleaver 122d rearranges packets so that packets belonging to the same error-correcting block are arranged at every minimum number of packets (for example, every three packets).

More specifically, the packet interleaver 122d is configured to have buffers, number of which is equal to the minimum number of packets (for example, three), and each of the buffers can store packets of one error-correcting block. As illustrated in FIG. 12A, the packet interleaver 122d stores packets in each buffer in the order from the youngest memory number.

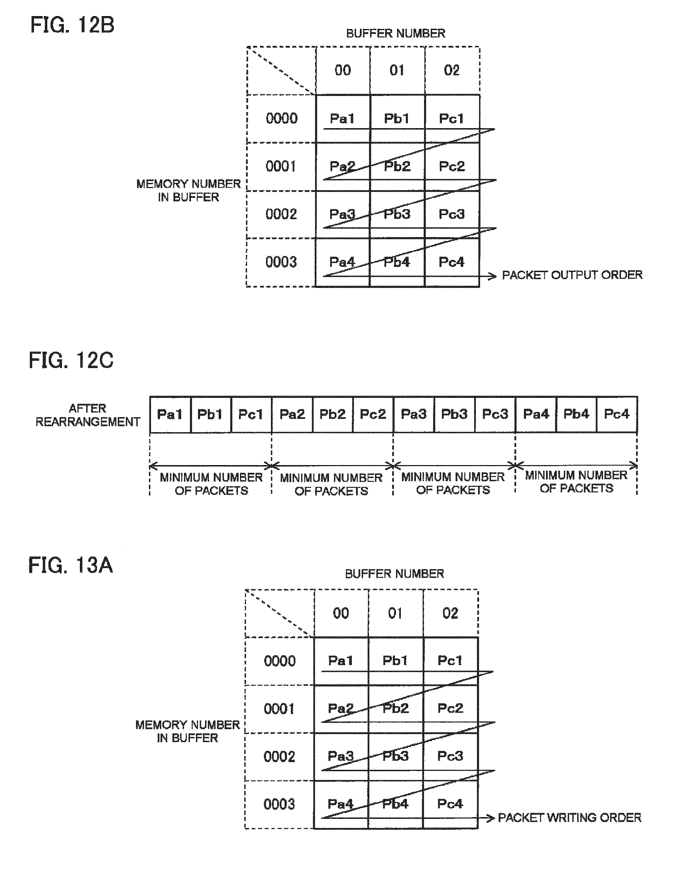

Also, as illustrated in FIG. 12B, the packet interleaver 122d outputs packets while changing buffers in the order from the youngest buffer number. As a result, as illustrated in FIG. 12C, packets are rearranged so that packets in the same error-correcting block are arranged at every minimum number of packets.

Returning to FIG. 8, the modulator 122e uses a predetermined modulation method to modulate the packets that are rearranged by the packet interleaver 122d, and converts the packets into an analog signal having a predetermined frequency (step S105).

The modulation method is not limited to a specific modulation method, and for example, it is possible to use BPSK (Binary Phase Shift Keying), QPSK (Quadrature Phase Shift Keying), 8PSK (8 Phase Shift Keying), 16APAK (16 Amplitude Phase Shift Keying), 32APSK (32 Amplitude Phase Shift Keying) and the like as the modulation method.

The modulator 122e transmits the modulated packets (in other words, the analog signal) to the transmitter 123 (step S106). The transmitter 123 converts the received analog signal into an electric signal in a frequency band for satellite communication, and then amplifies the converted electric signal and outputs the amplified electric signal to the antenna 130. The antenna 130 transmits the signal that is supplied from the transmitter 123 to the helicopter 200 via the communication satellite 300.

Moving to an explanation of the processing on the helicopter side illustrated in FIG. 8, the controller 222 of the helicopter-mounted communication apparatus 220 determines whether a signal is received from the receiver 224 (step S107). When a signal is not received (step S107: No), the controller 222 repeats step S107 until a signal is received. When a signal is received (step S107: Yes), processing advances to step S108.

The demodulator 222f demodulates the received signal (in other words, the analog signal) using a demodulation method that corresponds to the modulation method used in step S105, and converts the signal into a digital signal (step S108).

The packet de-interleaver 222g rearranges the packets that are rearranged in step S104 to the original order. For example, it is presumed that the packet interleaver 122d of the information-transmitting source rearranged the packets so that the packets in the same error-correcting block are arranged at every three packets.

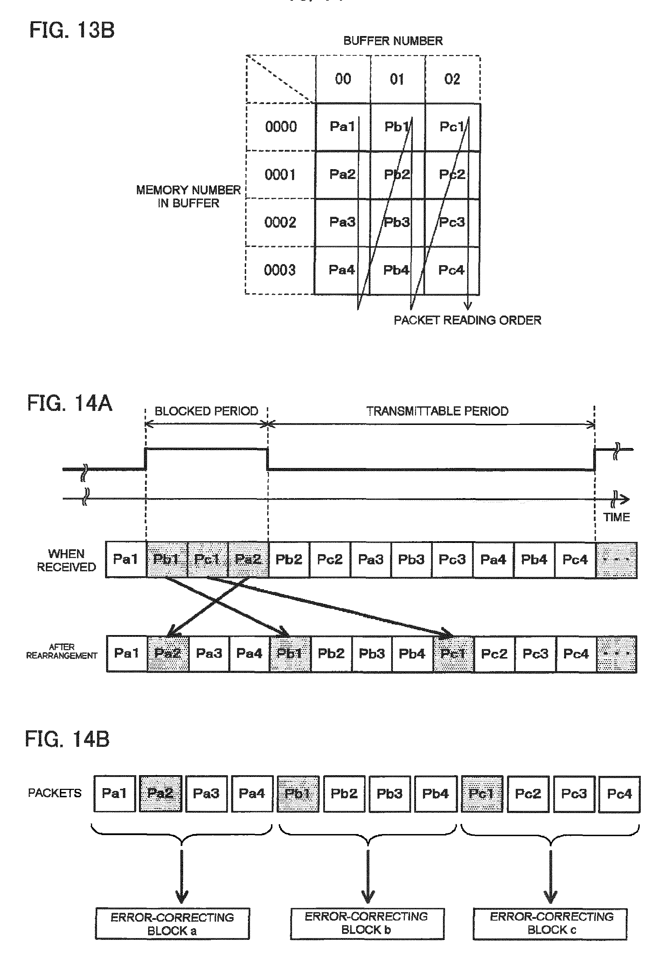

In this case, the packet de-interleaver 222g, for example, prepares three buffers such that one buffer can store packets of one error-correcting block, and then, as illustrated in FIG. 13A, stores packets in an alternating manner in these three buffers in the order of youngest buffer number. The packet de-interleaver 222g also, as illustrated in FIG. 13B, reads packets of each buffer in the order of youngest memory number.

As a result, as illustrated in FIG. 14A, the received packets are rearranged in the original packet order. After rearrangement is completed, the packet de-interleaver 222g, as illustrated in FIG. 14B, combines the rearranged packets, and obtains the error-correcting blocks that are generated in step S102 (step S109).

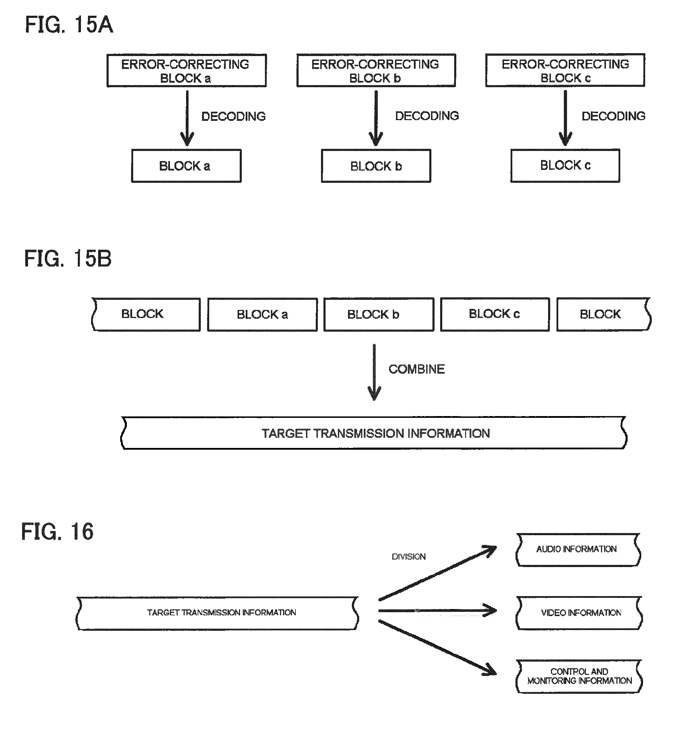

Returning to the flowchart shown in FIG. 8, the decoder 222h, as illustrated in FIG. 15A, decodes the error-correcting blocks that are acquired in step S109, and restores the data that is lost due to the rotor blades. Here, "decoding" is the restoration of data that is lost or changed due to the effect of the rotor blades, and is performed by executing error correction of the encoded data. Furthermore, the decoder 222h, as illustrated in FIG. 15B, combines the restored data to obtain the target transmission information that is multiplexed in step S101 (step S110).

Returning to the flowchart shown in FIG. 8, the data divider 222i, as illustrated in FIG. 16, divides the target transmission information obtained in step S110 into "video", "audio", "control and monitoring information" and the like, and transmits that information to the information terminal 210 via the external interface 221 (step S111). After the transmission of information is completed, the controller 222 returns to processing of step S107 and waits again for a signal to be received from the terrestrial station 100.

Next, the transmitting process by the helicopter is explained.

The controller 222 of the helicopter-mounted communication apparatus 220 receives target transmission information such as video or audio from the information terminal 210 via the external interface 221, and then starts the "information transmitting process" for transmitting the received target transmission information to the terrestrial station 100.

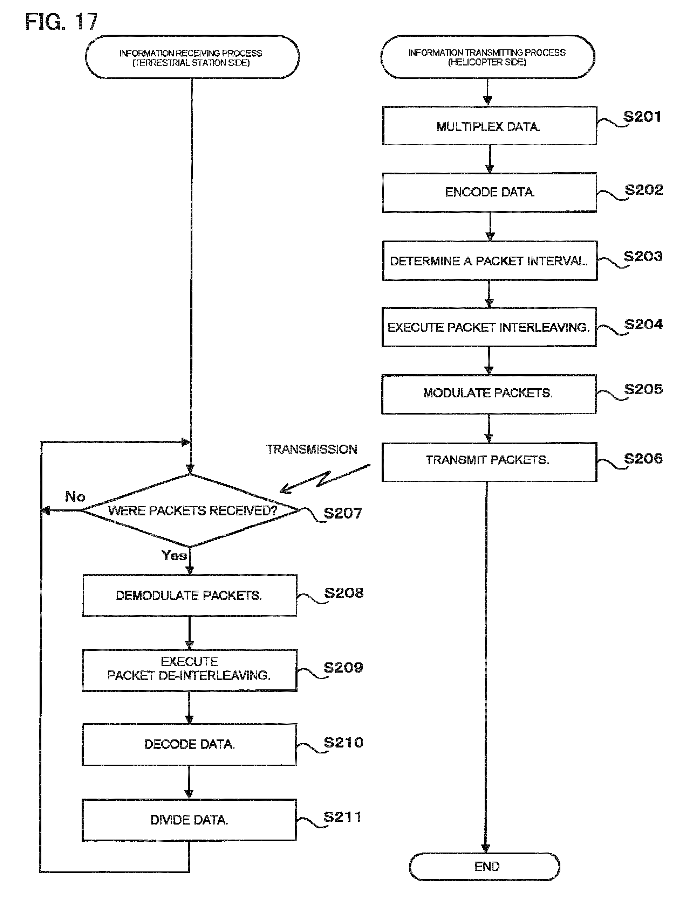

Then, after the power to the terrestrial communication apparatus 120 has been turned ON, the controller 122 starts the "information receiving process" that transmits the information received from the helicopter 200 to the information terminal 110. In the following, the "information transmitting process" and "information receiving process" are explained with reference to the flowchart shown in FIG. 17.

The data multiplexer 222a receives target transmission information from the information terminal 210, and then, as in step S101, executes a multiplexing process that combines the plural time series data into one time series data (step S201).

The encoder 222b, as in step S102, divides the multiplexed target transmission information into blocks having a predetermined length, and encodes the divided target transmission information in block units (step S202).

The blocked period acquirer 222c determines, based on blocked period information that is stored in storage 225, the length of a blocked period during which information is blocked by the rotor blades of the helicopter 200 (step S203). For example, when it is presumed that blocked period information such as illustrated in FIG. 7 is stored in storage 225, the blocked period acquirer 222c determines that the blocked period 10 ms that is stored in the block period information is the appropriate blocked period.

Returning to the flowchart FIG. 17, the packet interleaver 222d, as in step S104, divides the error-correcting blocks that are encoded by the encoder 222b into a plurality of packets. Furthermore, the packet interleaver 222d, as in step S104, rearranges the order of the packets so that consecutive packets are arranged to have a packet interval that is equal to or greater than the blocked period determined by the blocked period acquirer 222c provided between.

The packet interleaver 222d, as in step S104, can also rearrange packets while weaving together packets of other error-correcting blocks so that packets in the same error-correcting block are not consecutive. When doing this, the packet interleaver 222d, as in step S104, can rearrange packets so that packets in the same error-correcting block are arranged to have a packet interval that is equal to or greater than the blocked period provided in between, or can rearrange packets so that packets in the same error-correcting block are arranged at every minimum number of packets (step S204).

The modulator 222e, using a predetermined modulation method, modulates the packets that are rearranged by the packet interleaver 222d, and converts the packets into an analog signal having a predetermined frequency (step S205).

The modulator 222e transmits the modulated packets (in other words, the analog signal) to the transmitter 223 (step S206). The transmitter 223 converts the received analog signal into an electric signal in a frequency band for satellite communication, and then amplifies the converted electric signal and outputs that signal to the antenna 230. The antenna 230 transmits the signal that is output from the transmitter 223 to the terrestrial station 100 via the communication satellite 300.

Moving to an explanation of the processing on the terrestrial station side illustrated in FIG. 17, the controller 122 determines whether a signal is received from the receiver 124 (step S207). When a signal is not received (step S207: No), the controller 122 repeats step S207 until a signal is received. When a signal is received (step S207: Yes), processing advances to step S208.

The demodulator 122f demodulates the received signal using a demodulation method that corresponds to the modulation method used in step S205, and converts the signal into a digital signal (step S208).

The packet de-interleaver 122g rearranges the packets that are rearranged in step S204 to the original order. Furthermore, the packet de-interleaver 122g combines the rearranged packets and obtains the error-correcting blocks that are generated in step S202 (step S209).

The decoder 122h decodes the error-correcting blocks that are acquired in step S209, and restores the data that is lost due to the effect of the rotor blades. Furthermore, the decoder 122h combines the restored data to obtain the target transmission information (step S210).

The data divider 122i divides the target transmission information obtained in step S210 into information such as video and audio, and transmits that information to the information terminal 110 via the external interface 121 (step S211). After the transmission of information is completed, the controller 122 returns to processing of step S207 and waits again for receiving a signal from the helicopter 200.

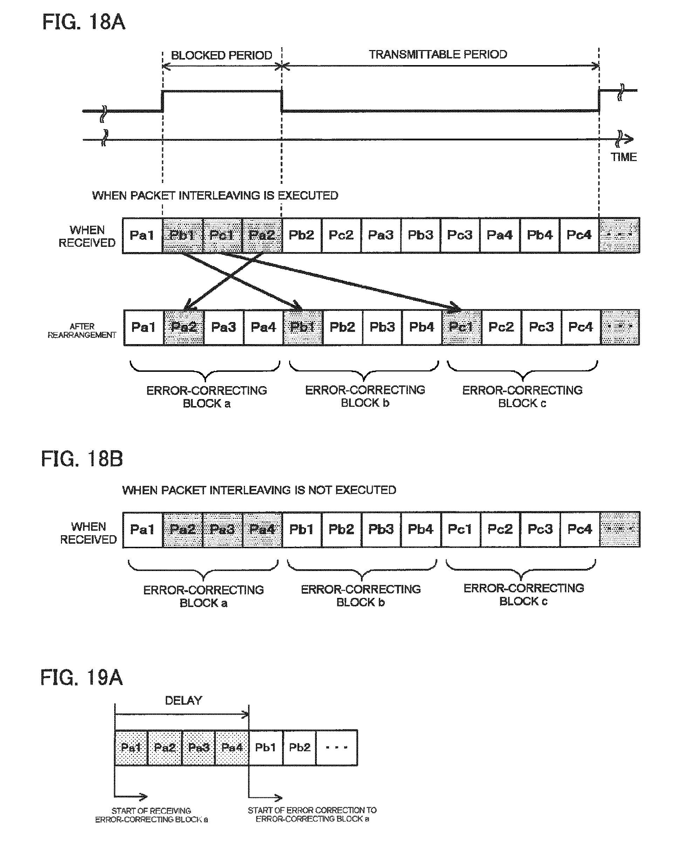

With this embodiment, packets are rearranged so that consecutive packets are not consecutive, so that even when data is lost in succession due to the rotor blades of the helicopter, the positions of the lost packets are dispersed by rearranging the packets into the original order as illustrated in FIG. 18A.

Therefore, it is possible to suppress burst error, which is a large cause of error correction failure, and as a result, it is possible to increase the efficiency of error correction. Therefore, it becomes possible to restore data without having to transmit the same data multiple times at staggered intervals, and thus, it is possible to use the bandwidth more efficiently.

Moreover, a packet interval between consecutive packets is configured so as to be equal to or greater than the blocked period, so consecutive loss of packets due to blockage of the communication path during one time is reduced. As a result, the burst length of burst error can be further shortened, and thus it becomes possible to execute error correction more reliably.

Packets are rearranged while weaving together packets of other error-correcting blocks so that packets in the same error-correcting block are not placed consecutively, so that, the concentration of lost packets in one error-correcting block, for example as illustrated in FIG. 18B, is suppressed so as not to exceed the correction capability of the error-correcting block. As a result, data loss per one error-correcting block can be reduced, thus making it possible to execute error correction more reliably.

Moreover, the packet interval between packets that belong to the same error-correcting block is configured so as to be equal to or greater than the blocked period, so that simultaneous loss of a plurality of packets in the same error-correcting block due to one blockage of the communication path is suppressed. As a result, the data loss per one error-correcting block can be further reduced, thus making it possible to execute error correction more reliably.

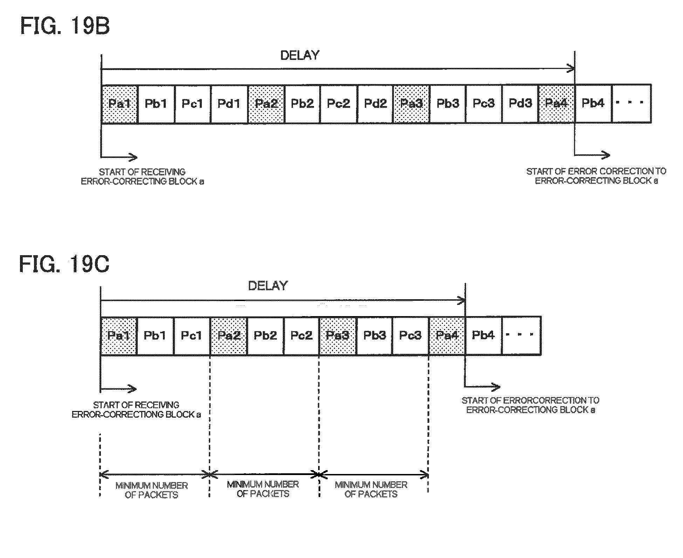

When executing error correction, error correction cannot be executed until all of the data in the error-correcting block are assembled together as illustrated in FIG. 19A, for example, so when assembling together all of the data is delayed, the delay in output of information to the information terminal increases. Particularly, when packet interleaving is executed, there is a possibility that due to the rearranging of the packets, the delay in output of information will increase as illustrated in FIG. 19B, for example.

However, in this embodiment, as illustrated in FIG. 19C, for example, the minimum number of packets that is equal to or greater than the blocked time is determined, and packets are rearranged so that packets belonging to the same error-correcting block are arranged at every minimum number of packets. And it is possible to restore lost packets through error correction, and the delay in output of information to the information terminal does not increase more than necessary.

Furthermore, the blocked time is determined for each helicopter, so the delay in output of information in a helicopter not having a large rotor blade width and long blocked time does not become larger than necessary to match with a helicopter having a large rotor blade width and long blocked time.

In this embodiment, a system that performs communication between a terrestrial station and a helicopter via a communication satellite is given as an example of helicopter satellite communication system, however, a helicopter satellite communication system is not limited to a system that performs communication between a terrestrial station and a helicopter.

For example, a helicopter satellite communication system can be an apparatus that performs communication between one helicopter and another helicopter, or can be a system that performs communication between a helicopter and an airplane. In that case, communication apparatuses that are similar to the helicopter-mounted communication apparatus 220 and terrestrial station communication apparatus 120 are mounted in the helicopter and airplane.

Moreover, the satellite that is used in the helicopter satellite communication system 1 is not limited to a communication satellite, and can be another kind of satellite that orbits around the earth such as a broadcast satellite, space station or the like.

Information about the blocked period that is acquired by the blocked period acquirer 122c or blocked period acquirer 222c does not absolutely have to be stored in advance in the helicopter information or the blocked period information.

For example, it is possible to determine the positional relationship between the satellite, antenna and rotor blades based on helicopter position information (for example, information about the latitude, longitude, altitude and the like of the craft body), attitude information (for example, information about the roll axis, pitch axis, azimuth and the like of the craft body), orbital position information of the satellite and the like, and then based on the result of that determination, it is possible to successively calculate the blocked period.

Furthermore, the error-correcting encoding method that is used by the encoder 122b and encoder 222b is not limited to a LDPC code or Reed-Solomon code. The error-correcting encoding method can be another block code such as a BCH code, fire code or the like, or can also be a convolutional code such as a turbo code. The encoding method can also be a combination of a block code and a convolutional code.

In this embodiment, the same communication method is used in the terrestrial station transmitting process and helicopter transmitting process; however, it is also possible to use different communication methods in the terrestrial station transmitting process and helicopter transmitting process. For example, the terrestrial station transmitting process can use the method illustrated in FIG. 8, and the helicopter transmitting process can use the method disclosed in Patent Literature 1.

Moreover, the functions (data multiplexer, encoder, blocked period acquirer, packet interleaver, modulator, demodulator, packet de-interleaver, decoder, data divider) of the controller 122 and controller 222 do not necessarily have to be performed by one processor.

For example, these functions can be performed by using a plurality of processors or circuits, and it is also possible to perform only part of these functions using a different processor or circuit than the other functions. It is even possible to perform these functions by using an independent processor or circuit for each function.

The helicopter satellite communication system 1, terrestrial station communication apparatus 120 and helicopter-mounted communication apparatus 220 of this embodiment can be performed using an exclusive system, or can be performed by using a normal computer system.

For example, a program for executing the aforementioned operations may be stored on a computer-readable non-transitory recording medium, and the helicopter satellite communication system 1, terrestrial station communication apparatus 120 and helicopter-mounted communication apparatus 220 may be configured with a computer to which the program, distributed by a computer-readable recording medium, is installed.

It is also possible to store the program on a disc apparatus of a server on a network such as the Internet, and to download that program to a computer, for example. The functions described above can also be performed by the OS and application software working together. In that case, the portion other than the OS can be stored and distributed on a medium and downloaded to a computer.

As the non-transitory recording medium on which the program above is stored, it is possible to use a non-transitory recording medium that can be read by a computer such as a USB memory, flexible disc, CD, DVD, Blu-ray (registered trademark), MO, SD card, memory stick (registered trademark), as well as, a magnetic disc, optical disc, magneto-optical disc, semiconductor memory, magnetic tape and the like.

The present disclosure can be embodied in various ways and can undergo various modifications without departing from the broad spirit and range of the disclosure. Moreover, the embodiment described above is for explaining the present disclosure, and does not limit the range of the present disclosure. In other words, the range of the present disclosure is as set forth in the claims and not the embodiment. Various changes and modifications that are within the range disclosed in the claims or that are within a range that is equivalent to the claims of the disclosure are also included within the range of the present disclosure.

This specification claims priority over Japanese Patent Application No. 2012-077557, including the description, claims, drawings and abstract, as filed on March 29, 2012. The disclosure of this original Patent Application is included in its entirety in this application by reference.

### List of Reference Signs

- 1: Helicopter satellite communication system
- 100: Terrestrial station
- 110, 210: Information terminal
- 120: Terrestrial station communication apparatus
- 121, 221: External interface
- 122, 222: Controller
- 122a, 222a: Data multiplexer
- 122b, 222b: Encoder
- 122c, 222c: Blocked period acquirer
- 122d, 222d: Packet interleaver
- 122e, 222e: Modulator
- 122f, 222f: Demodulator
- 122g, 222g: Packet de-interleaver
- 122h, 222h: Decoder
- 122i, 222i: Data divider
- 123, 223: Transmitter
- 124, 224: Receiver
- 125, 225: Storage
- 130, 230: Antenna
- 200: Helicopter
- 220: Helicopter-mounted communication apparatus
- 300: Communication satellite

## Claims

1. A helicopter satellite communication system comprising:
a first communication apparatus to be mounted in a helicopter; and
a second communication apparatus that is adapted to communicate with the first communication apparatus via a satellite;
wherein one communication apparatus among the first communication apparatus and second communication apparatus includes:
- an encoder that is adapted to encode target transmission information using a predetermined error-correcting encoding method;
- a packet interleaver that is adapted to divide the encoded target transmission information into a plurality of packets, and to rearrange the order of packets so that the packets that are consecutive in the packet order immediately after the division are not placed consecutively; and
- a transmitter that is adapted to transmit the packets that are rearranged by the packet interleaver to the other communication apparatus via the satellite; and werein the other communication apparatus includes:
- a receiver that is adapted to receive the packets that are transmitted from the one communication apparatus via the satellite;
- a packet de-interleaver that is adapted to rearrange the received packets into the original order; and
- a decoder that, by decoding the target transmission information that is acquired from the packets that are rearranged by the packet de-interleaver, is adapted to restore the information that is lost due to rotor blades of the helicopter.

2. The helicopter satellite communication system according to Claim 1, wherein the one communication apparatus includes a blocked period acquirer that is adapted to acquire the length of blocked periods during which the communication path is blocked by the rotor blades of the helicopter; and
the packet interleaver is adapted to rearrange the order of the packets so that a packet interval that is equal to or greater than the length of the blocked period is provided between packets that are consecutive in the packet order immediately after the division.

3. The helicopter satellite communication system according to Claim 2, wherein the encoder is adapted to encode the target transmission information in block units; and
the packet interleaver is adapted to divide the encoded block into a plurality of packets, and to rearrange the divided packets while weaving together packets of other blocks so that packets in the same block are not placed consecutively.

4. The helicopter satellite communication system according to Claim 3, wherein the packet interleaver is adapted to rearrange the order of packets so that packets that belong to the same block are arranged so that a packet interval that is equal to or greater than the blocked period is provided between the packets.

5. The helicopter satellite communication system according to Claim 4, wherein the packet interleaver is adapted to determine the minimum number of packets that is equal to or greater than the blocked period when packets are continuously transmitted, and to rearrange the packets so that packets that belong to the same block are arranged at every minimum number of packets determined.

6. The helicopter satellite communication system according to Claim 5, wherein the second communication apparatus includes storage that is adapted to store helicopter information that correlates model information about the helicopter and the length of a blocked period during which there is blockage by the rotor blades of the helicopter indicated by that model information; and
a block period determiner of the second communication apparatus is adapted to determine the length of the blocked period for each helicopter based on the model information of the helicopter in which the first communication apparatus is mounted and the helicopter information.

7. A communication apparatus that is one communication apparatus among a first communication apparatus that is mounted in a helicopter and a second communication apparatus that is adapted to communicate with the first communication apparatus via a satellite; comprising:
an encoder that is adapted to encode target transmission information using a predetermined error-correcting encoding method;
a packet interleaver that is adapted to divide the encoded target transmission information into a plurality of packets, and to rearrange the order of packets so that the packets that are consecutive in the packet order immediately after the division are not placed consecutively; and
a transmitter that is adapted to transmit the packets that are rearranged by the packet interleaver to the other communication apparatus via the satellite.

8. A communication apparatus that is one communication apparatus among a first communication apparatus that is mounted in a helicopter and a second communication apparatus that is adapted to communicate with the first communication apparatus via a satellite; comprising:
a receiver that is adapted to receive the packets that are transmitted from the other communication apparatus via the satellite;
a packet de-interleaver that is adapted to rearrange the packets that are rearranged by the other communication apparatus into the original order; and
a decoder that, by decoding the target transmission information that is acquired from the packets that are rearranged by the packet de-interleaver, is adapted to restore the information that is lost due to rotor blades of the helicopter.

9. A communication method for communicating between one communication apparatus among a first communication apparatus that is mounted in a helicopter and a second communication apparatus that communicates with the first communication apparatus via a satellite, and the other communication apparatus; comprising:
- an encoding step that encodes target transmission information using a predetermined error-correcting encoding method;
- a packet interleaving step that divides the encoded target transmission information into a plurality of packets, and rearranges the order of packets so that the packets that are consecutive in the packet order immediately after the division are not placed consecutively;
- a transmitting step that transmits the packets that are rearranged by the packet interleaving step to the other communication apparatus via the satellite;
- a receiving step that receives the packets that are transmitted from the one communication apparatus via the satellite;
- a packet de-interleaving step that rearranges the received packets into the original order; and
- a decoding step that, by decoding the target transmission information that is acquired from the packets that are rearranged by the packet de-interleaving step, restores the information that is lost due to rotor blades of the helicopter.

10. A communication program that causes a computer that controls one communication apparatus among a first communication apparatus that is mounted in a helicopter and a second communication apparatus that communicates with the first communication apparatus via a satellite to perform:
- an encoding function that encodes target transmission information using a predetermined error-correcting encoding method;
- a packet interleaving function that divides the encoded target transmission information into a plurality of packets, and rearranges the order of packets so that the packets that are consecutive in the packet order immediately after the division are not placed consecutively; and
- a transmitting function that transmits the packets that are rearranged by the packet interleaving function to the other communication apparatus via the satellite.

11. A communication program that causes a computer that controls one communication apparatus among a first communication apparatus that is mounted in a helicopter and a second communication apparatus that communicates with the first communication apparatus via a satellite to perform:
- a receiving function that receives the packets that are transmitted from the other communication apparatus via the satellite;
- a packet de-interleaving function that rearranges the packets that are rearranged by the other communication apparatus into the original order; and
- a decoding function that, by decoding the target transmission information that is acquired from the packets that are rearranged by the packet de-interleaving function, restores the information that is lost due to rotor blades of the helicopter.
